# EUROPEAN PATENT APPLICATION

(11) **EP 4 079 153 A1**
(43) Date of publication of application: **26.10.2022**
(21) Application number: 22162010.7
(22) Date of filing: 13.03.2020
(51) Int. Cl.: A01M 7/00

(54) **AGRICULTURAL WORK VEHICLE**

(30) Priority: 22.03.2019 JP 2019054020
(62) Divisional of application: 20778923.1
(71) Applicant: Yanmar Power Technology Co., Ltd., Osaka-shi Osaka 530-8311 (JP)
(72) Inventor: WAKUTA, Kensaku, Osaka-shi (JP)
(74) Representative: Dennemeyer & Associates S.A.

(57) **Abstract**

An agricultural work vehicle 1 is provided with crawler travel parts (10), support platform frames, a front/back structure, an engine, a hydraulic pump, a tank frame, and an injection nozzle unit (56). The crawler travel parts (10) travel so as to hold a plant (100) therebetween in the left/right direction. The support platform frames are disposed as a left/right pair, respectively overlapping with the left/right crawler travel parts (10) in plan view. The front/back structures each include a left frame, a right frame, and a coupling frame. The engine is disposed at the left or right support platform frame. The hydraulic pump is disposed on the same side, out of the left and right support platform frames, as the engine, and is driven by the engine. A hydraulic oil tank is located on the opposite side in the left/right direction from the left support platform frame where the engine is disposed, and stores hydraulic oil to be supplied to the hydraulic pump.

## Description

### TECHNICAL FIELD

The present invention mainly relates to an agricultural work vehicle.

### BACKGROUND ART

In Patent Literature 1, there is disclosed a pest control machine including crawlers that are arranged as a left-right pair, a base that is arranged so as to straddle the left and right crawlers, and a sprayer machine that is mounted on the base. This pest control machine travels between the trees in an orchard and sprays a chemical on the trees on both sides.

In Patent Literatures 2 to 5, there are disclosed vehicles that travel so as to straddle a crop, which is a target on which a chemical is sprayed. On this type of vehicle, frames extending upward from the respective crawlers arranged as a left-right pair are arranged. Further, these frames are coupled at an upper part. The engine for driving the crawlers and the chemical tank are supported by a frame of the upper part where these frames are coupled.

### CITATION LIST

### Patent Literature

Patent Literature 1: Japanese Unexamined Patent Application Publication No. H8-214757
Patent Literature 2: Japanese Unexamined Patent Application Publication No. 2007-295869
Patent Literature 3: Japanese Unexamined Patent Application Publication No. 2001-161143
Patent Literature 4: Japanese Unexamined Patent Application Publication No. 2000-316315
Patent Literature 5: Japanese Unexamined Patent Application Publication No. 2002-142645

### DISCLOSURE OF INVENTION

### PROBLEMS TO BE SOLVED BY THE INVENTION

However, in the configurations of Patent Literatures 2 to 5, the position of the center of gravity is high due to the high positions of the engine and the like that are heavy objects. As a result, the vehicle body may be unstable, for example, during traveling on a sloping land or during making a turn.

The present invention was made in view of the above situations, and its main object is to provide an agricultural work vehicle that is capable of stable traveling with a low center of gravity.

### MEANS FOR SOLVING THE PROBLEMS AND EFFECT OF THE INVENTION

The problem to be solved by the present invention is as described above, and the means for solving this problem and effects thereof will be explained below.

According to the first aspect of the present invention, an agricultural work vehicle having such a configuration as described below is provided. That is, this agricultural work vehicle includes hydraulically-operated crawler travel parts, support platform frames, structures, an engine, a hydraulic pump, and a hydraulic oil tank. The hydraulically-operated crawler travel parts are arranged as a left-right pair. The support platform frames are arranged as a left-right pair and respectively overlap the left and right crawler travel parts in plan view. The structures are arranged as a front-rear pair and each includes a left frame, which extends upward on the left side of the vehicle width direction, a right frame, which extends upward on the right side of the vehicle width direction, and a coupling frame, which couples an upper part of the left frame with an upper part of the right frame at a position higher than the support platform frames. The engine is arranged on either one of the left and right support platform frames. The hydraulic pump is arranged on the same one of the left and right support platform frames, on which the engine is arranged, and is driven by the engine for driving at least the crawler travel parts. The hydraulic oil tank is located on the support platform frame which is opposite to the support platform frame on which the engine is arranged in the left-right direction and stores hydraulic oil to be supplied to the hydraulic pump.

Accordingly, the engine and the hydraulic oil tank, which are heavy objects, can be supported on a support platform frame that is lower than the coupling frames. As a result, the center of gravity can be lowered, so that the agricultural work vehicle can be stabilized. Further, the hydraulic oil tank is arranged on the opposite side of the support platform frame on which the engine and hydraulic pump are arranged, so that the weight balance between the left and right sides can be thereby made preferable.

According to the second aspect of the present invention, an agricultural work vehicle having such a configuration as described below is provided. That is, this agricultural work vehicle includes hydraulically-operated crawler travel parts, support platform frames, structures, an engine, a hydraulic pump, a chemical tank, and a chemical ejection part. The crawler travel parts are arranged as a left-right pair so as to travel in such a manner that a spray target object of a chemical is positioned therebetween in the left-right direction. The support platform frames are arranged as a left-right pair and respectively overlap the left and right crawler travel parts in plan view. The structures are arranged as a front-rear pair and each includes a left frame, which extends upward on the left side of the vehicle width direction, a right frame, which extends upward on the right side of the vehicle width direction, and a coupling frame, which couples an upper part of the left frame with an upper part of the right frame at a position higher than the support platform frames. The engine is arranged on either one of the left and right support platform frames. The hydraulic pump is arranged on the same one of the left and right support platform frames, on which the engine is arranged, and is driven by the engine for driving at least the crawler travel parts. The chemical tank is arranged on the left or right support platform frame opposite to the left or right support platform frame on which the engine is arranged. The chemical ejection part ejects the chemical on the spray target object.

Accordingly, the engine, the hydraulic pump, and the chemical tank, which are heavy objects, can be supported on a support platform frame that is lower than the coupling frames. As a result, the center of gravity can be lowered, so that the agricultural work vehicle can be stabilized. Further, the chemical tank is arranged on the opposite side of the support platform frame on which the engine and hydraulic pump are arranged, so that the weight balance between the left and right sides can be thereby made preferable.

It is preferable that the above-described agricultural work vehicle has such a configuration as described below. That is, this agricultural work vehicle includes a hydraulic oil tank that stores hydraulic oil to be supplied to the hydraulic pump. The hydraulic oil tank has a shape extending in the front-rear direction, and the hydraulic oil tank configures at least a part of support platform frames.

Accordingly, since the hydraulic oil tank configures a part of the frame configuration, the frame configuration can be simplified.

It is preferable that, in the above-described agricultural work vehicle, the hydraulic oil tank is arranged on the same side as the chemical tank in the left and right directions.

Accordingly, by arranging the hydraulic pump and the hydraulic oil tank separately on the left and right sides on purpose, the weight on the engine side, which tends to be heavy, can be lighter.

It is preferable that the above-described agricultural work vehicle includes an antenna unit for remote operation or for autonomous traveling, which is supported by at least one of the front and rear coupling frames.

In general, it is preferable that the antenna unit is arranged at a high position in order to perform reliable communication. Note that, since the antenna unit is relatively lightweight, there is little effect on the center of gravity even if the antenna unit is arranged at a high position.

It is preferable that, in the above-described agricultural work vehicle, a chemical ejection part that ejects a chemical to the left and right is supported by at least one of the front and rear left frames and by at least one of the front and rear right frames.

Accordingly, by utilizing the left frames and the right frames, the chemical can be sprayed on the spray target objects of various heights.

It is preferable that the above-described agricultural work vehicle has such a configuration as described below. That is, this agricultural work vehicle includes upper frames and crawler connection frames. The upper frames are arranged as a left-right pair to couple upper parts of the front and rear structures with each other. The crawler connection frames are arranged as a left-right pair to be respectively connected to the inner sides of the left and right crawler travel parts in the left-right direction and extend in the front-rear direction. The left frame is connected to the crawler connection frame on the left side. The right frame is connected to the crawler connection frame on the right side.

Accordingly, since the front and rear structures are coupled at the upper parts as well, the strength can be improved. Furthermore, since the left frames and the right frames stand up from the inner sides of the crawler travel parts, the support surface of the support platform frames can be made wider as compared with a configuration in which they stand up from the center.

### BRIEF DESCRIPTION OF DRAWINGS

[FIG. 1] A perspective view of an agricultural work vehicle according to an embodiment of the present invention viewed from the rear side
[FIG. 2] A front view of the agricultural work vehicle
[FIG. 3] A perspective view of a vehicle body frame viewed from the rear side
[FIG. 4] A perspective view of components mounted on a left support platform frame viewed from the rear side
[FIG. 5] A perspective view of components mounted on a tank frame viewed from the front side
[FIG. 6] Aperspective view illustrating a support mechanism of crawler travel parts according to a modification example

### DESCRIPTION OF EMBODIMENTS

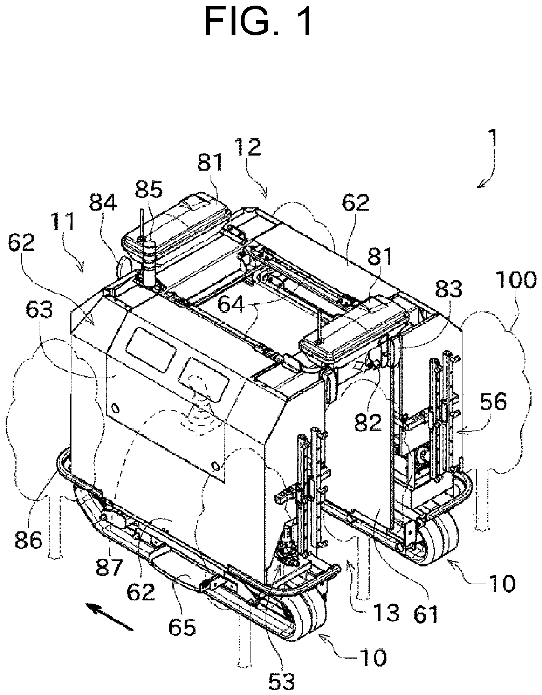

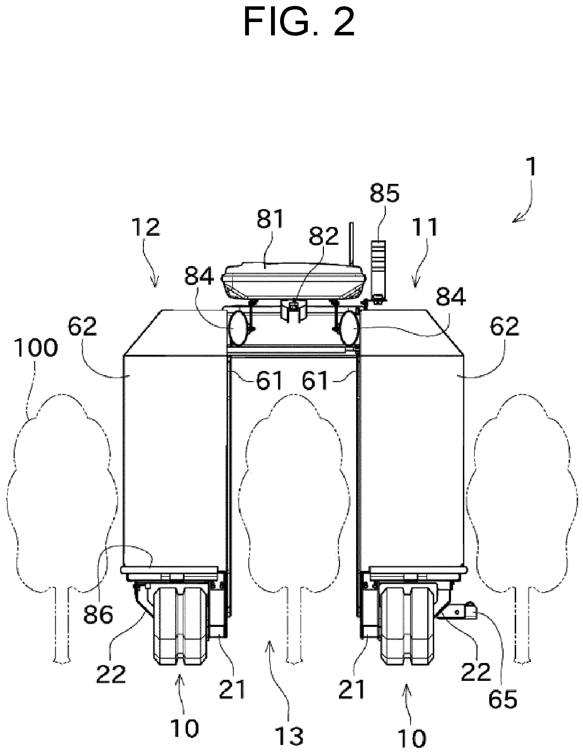

Next, an explanation will be given of an embodiment of the present invention with reference to the drawings. FIG. 1 is a perspective view of the rear side of the agricultural work vehicle 1. FIG. 2 is a front view of the agricultural work vehicle 1. In the explanation below, it is assumed that the forward-traveling direction of the agricultural work vehicle 1 corresponds to the front for the sake of the definitions of the front, rear, left, and right. Therefore, the vehicle width direction matches the left-right direction and the vehicle length direction matches the front-rear direction. In addition, the components of the agricultural work vehicle 1 that are arranged as a left-right pair (or a front-rear pair) are marked with the same reference numerals, so that the explanations may be omitted or simplified.

The agricultural work vehicle 1 is a vehicle that sprays a chemical on the plant 100 (a spray target object, a work target object) grown in a farm or the like. The plant 100 is a fruit tree, for example, but can be a vegetable. As illustrated in FIG. 1 and FIG. 2, the agricultural work vehicle 1 includes the crawler travel parts 10, the left vehicle body 11, and the right vehicle body 12. The crawler travel parts 10 are hydraulically operated, and drive sprockets rotate when hydraulic oil is supplied to the later-described hydraulic motors 45. Accordingly, the crawlers, which are wound around the drive sprockets, road wheels, etc., rotate so that the agricultural work vehicle 1 travels. Further, by making the driving speeds of the left and right crawler travel parts 10 different from each other, it is possible to cause the agricultural work vehicle 1 to make a turn. Further, by making the driving directions of the left and right crawler travel parts 10 different from each other, it is possible to cause the agricultural work vehicle 1 to make a turn without changing its position.

The left vehicle body 11 is mainly supported by the crawler travel part 10 on the left side. The right vehicle body 12 is mainly supported by the crawler travel part 10 on the right side. The left vehicle body 11 and the right vehicle body 12 are coupled in the upper part. Accordingly, the passage space 13 is formed between the left vehicle body 11 and the right vehicle body 12. The passage space 13 is a space in which no components are arranged up to a predetermined height from the ground so that the plant 100 is allowed to pass through when the agricultural work vehicle 1 travels. Accordingly, the left and right crawler travel parts 10 travel in such a manner that the plant 100 is positioned therebetween with respect to the left-right direction. In other words, the agricultural work vehicle 1 travels in a farm so as to straddle the plant 100.

Further, each of the left vehicle body 11 and the right vehicle body 12 is equipped with the ejection nozzle units 56. Each of the ejection nozzle units 56 sprays a chemical on both of the left side and the right side. Accordingly, the agricultural work vehicle 1 can simultaneously spray a chemical on the right section of the plant 100 on the left side of the agricultural work vehicle 1, both left and right side sections of the plant 100 passing through the passage space 13, and the left section of the plant 100 on the right side of the agricultural work vehicle 1. Although the chemical sprayed by the agricultural work vehicle 1 in the present embodiment is an agricultural chemical for pest control, it is also possible to use another chemical.

The agricultural work vehicle 1 is configured to be capable of autonomously traveling in a farm. That is, the agricultural work vehicle 1 detects the current position by use of a GNSS or the like. Further, based on the position information of the farm, an autonomous travel route is created in advance. With this configuration, the agricultural work vehicle 1 sprays a chemical on the plant 100 while performing autonomous traveling based on the current position and the autonomous travel route.

Note that the agricultural work vehicle 1 is not limited to a vehicle that performs autonomous traveling. For example, it is also possible that the agricultural work vehicle 1 is a vehicle that travels with remote operation. The remote operation is to make the agricultural work vehicle 1 travel or make the agricultural work vehicle 1 spray a chemical, based on an operation by a worker who is at a position distant from the agricultural work vehicle 1 (that is, a worker who is not aboard the agricultural work vehicle 1).

Note that the inner covers 61 are respectively disposed on the sections of the left vehicle body 11 and the right vehicle body 12 facing the passage space 13. Further, the outer covers 62 are disposed on the other outer surfaces (the upper faces, front faces, rear faces, and the outer faces in the left-right direction) of the left vehicle body 11 and the right vehicle body 12.

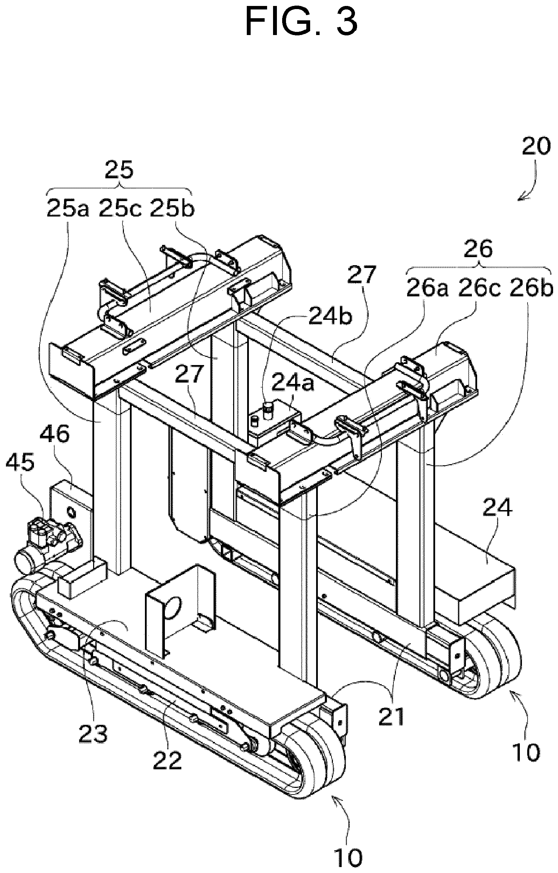

Next, with reference to FIG. 3, the vehicle body frame 20 included in the agricultural work vehicle 1 will be specifically explained. FIG. 3 is a perspective view illustrating the structure of the vehicle body frame 20. Note that, in the explanation below, expressions that a given member is connected to (coupled with, attached to, supported by) another member include, not only such a configuration in which both members are directly connected or the like, but also such a configuration in which both members are connected or the like via an additional member. Further, unless otherwise specified, the members arranged as a left-right pair or a front-rear pair have the same configuration or reversed configurations.

The vehicle body frame 20 is a member serving as a framework of the agricultural work vehicle 1. The main components included in the agricultural work vehicle 1 are attached to the vehicle body frame 20. As illustrated in FIG. 3, the vehicle body frame 20 includes the crawler connection frames 21, the connection plates 22, the left support platform frame 23, the tank frame 24, the front structure 25, the rear structure 26, and the upper frames 27.

The crawler connection frames 21 are members connected to the crawler travel parts 10. Therefore, the crawler connection frames 21 are arranged at positions overlapping the crawler travel parts 10 with respect to the up-down direction. The crawler connection frames 21 are disposed as a left-right pair. The crawler connection frames 21 are arranged so as to extend in the front-rear direction (i.e., so that the longitudinal direction matches the front-rear direction). The left and right crawler connection frames 21 are attached to the inner sides of the left and right crawler travel parts 10, respectively, with respect to the left-right direction. For example, the crawler connection frames 21 are connected to the track frames (the sections to which a road wheel is attached) of the crawler travel parts 10 by welding or the like.

The connection plates 22 are members connected to the crawler travel parts 10 as with the crawler connection frames 21. Therefore, the connection plates 22 are also arranged at positions overlapping the crawler travel parts 10 with respect to the up-down direction. The connection plates 22 are disposed as a left-right pair and are connected to the outer sides of the left and right crawler travel parts 10, respectively, with respect to the left-right direction. As with the crawler connection frames 21, the connection plates 22 are attached to the track frames of the crawler travel parts 10 by welding or the like, for example.

The left support platform frame 23 is arranged on the upper side of the crawler travel part 10 on the left side. The position of the left support platform frame 23 is not only higher than the crawler travel parts 10 in height but also overlaps the crawler travel part 10 with respect to the horizontal direction. In other words, the left support platform frame 23 is arranged so as to overlap the crawler travel part 10 in plan view. An end portion on the inner side of the left support platform frame 23 with respect to the left-right direction is connected to the crawler connection frame 21. An end portion on the outer side of the left support platform frame 23 with respect to the left-right direction is connected to the connection plate 22. With this configuration, the left support platform frame 23 is supported by the crawler travel part 10 via the crawler connection frame 21 and the connection plate 22. Furthermore, the left support platform frame 23 does not significantly protrude outward in the left-right direction from the crawler travel part 10. Further, the left support platform frame 23 is arranged so as to extend in the front-rear direction. The upper face of the left support platform frame 23 is a horizontal plane, on which the later-described various components are arranged. Since the left support platform frame 23 is arranged near the crawler travel part 10 with respect to the up-down direction (in other words, in a space below the center of the agricultural work vehicle 1 with respect to the up-down direction), the center of gravity is not raised so much even if a heavy object is arranged on the left support platform frame 23.

The tank frame 24 is a tank in which the hydraulic oil for driving the crawler travel parts 10 is contained. Further, the tank frame 24 also functions as a support platform frame as with the left support platform frame 23. Therefore, the tank frame 24 has a shape similar to the left support platform frame 23 and is arranged at a position similar to the left support platform frame 23 (the position to be a left-right reversal). Note that the tank frame 24 has a larger size in the thickness direction (the up-down direction) than the left support platform frame 23 since a space for containing the hydraulic oil is required. Further, the later-described components are also arranged on the upper face of the tank frame 24.

The front structure 25 is a frame in a shape of a gate disposed at the front part (on the front side relative to the center in the front-rear direction; the same is hereinafter true) of the agricultural work vehicle 1. Specifically, the front structure 25 includes the left frame 25a, the right frame 25b, and the coupling frame 25c.

The left frame 25a is a member that is arranged so as to extend in the up-down direction. Although the left frame 25a of the present embodiment extends along the vertical direction, it is also possible that the left frame 25a is configured to extend diagonally upward. The lower part of the left frame 25a is connected to the crawler connection frame 21 on the left side and the left support platform frame 23. In detail, the lower face of the left frame 25a is connected to the crawler connection frame 21, and a side face of the left frame 25a is connected to the left support platform frame 23. Note that it is also possible that the left frame 25a is configured to be connected to only one of the crawler connection frame 21 and the left support platform frame 23. The right frame 25b is a left-right reversal of the left frame 25a and has substantially the same shape and configuration as the left frame 25a.

The coupling frame 25c is arranged so as to extend in the left-right direction. The coupling frame 25c couples the upper part of the left frame 25a and the upper part of the right frame 25b. In detail, the coupling frame 25c is connected with bolts via members in a shape of a flat plate disposed at the upper ends of the left frame 25a and the right frame 25b. At the center of the coupling frame 25c with respect to the left-right direction, an attachment member for attaching the later-described antenna unit 81 is disposed. It is also possible that the coupling frame 25c is configured to couple the side faces of the left frame 25a and the right frame 25b with each other.

Note that, in order to realize the above-described passage space 13, the central parts and the lower parts of the left frame 25a and the right frame 25b are not coupled. Further, in order to realize the passage space 13 which is high in the up-down direction, it is preferable that the coupling frame 25c is disposed at a high position within a range where the required strength can be realized.

The rear structure 26 is a frame in a shape of a gate disposed at the rear part of the agricultural work vehicle 1. Specifically, the rear structure 26 includes the left frame 26a, the right frame 26b, and the coupling frame 26c. Since the rear structure 26 is configured to be a font-rear reversal of the front structure 25 (to be a reversal across a virtual plane positioned at the center in the front-rear direction), the explanation thereof is omitted.

The upper frames 27 are disposed as a left-right pair, and each of the upper frames 27 is arranged so as to extend in the front-rear direction. The left and right upper frames 27 couple the upper parts of the front structure 25 and the upper parts of the rear structure 26, respectively. Specifically, the front end of the upper frame 27 on the left side is connected to the upper end of the left frame 25a by welding or the like, and the rear end of the upper frame 27 on the left side is connected to the upper end of the left frame 26a by welding or the like. Similarly, the front end of the upper frame 27 on the right side is connected to the upper end of the right frame 25b by welding or the like, and the rear end of the upper frame 27 on the right side is connected to the upper end of the right frame 26b by welding or the like.

Further, the left frame 25a and the left frame 26a are coupled by the crawler connection frame 21 and the left support platform frame 23. Similarly, the right frame 25b and the right frame 26b are coupled by the crawler connection frame 21 and the tank frame 24. As described above, since each of the frames configuring the vehicle body frame 20 is coupled with each other except for the lower parts, high strength can be realized.

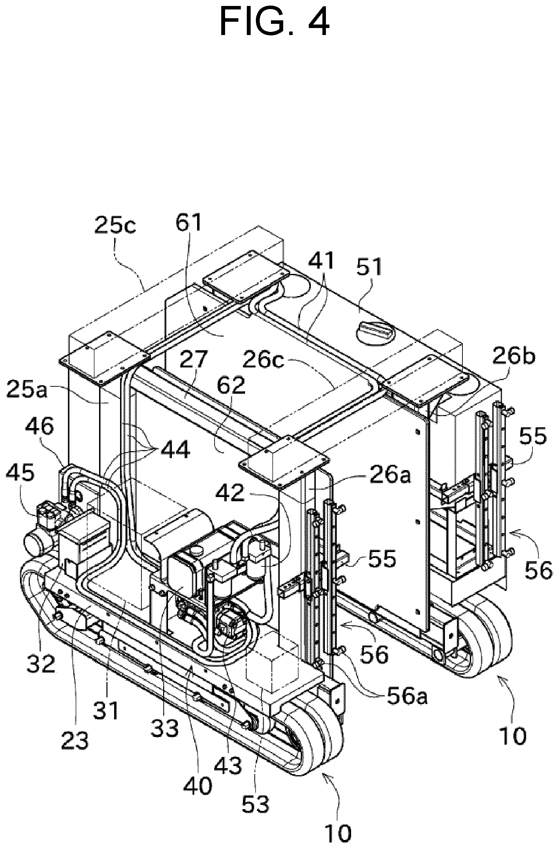

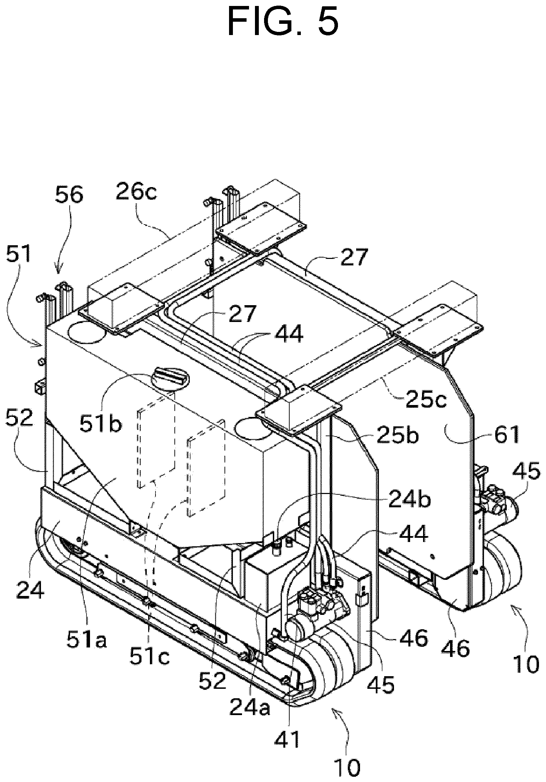

Next, with reference to FIG. 4 and FIG. 5, the components arranged on the left support platform frame 23 and the tank frame 24 will be explained. In FIG. 4, some components are illustrated with chain lines so that the hydraulic piping is clearly illustrated.

The engine 31, the battery 32, the fuel tank 33, and the hydraulic pump 43 are arranged on the left support platform frame 23.

The engine 31 is a gasoline engine or a diesel engine and generates power by use of the fuel contained in the fuel tank 33. Further, the engine 31 includes an alternator (generator), and the electric power generated by the alternator is stored in the battery 32. Note that these members are arranged in the order of the battery 32, the engine 31, and the fuel tank 33, starting from the front side. Further, the fuel tank 33 is arranged on a support platform disposed on the left support platform frame 23. Therefore, the fuel tank 33 is arranged at a position higher than the engine 31 and the battery 32. This makes it easy to perform the later-described refueling work. As described above, in the present embodiment, the engine 31 is arranged on one side (the left side) of the left-right direction, and the tank frame 24 (the hydraulic oil tank) is arranged on the other side (the right side) of the left-right direction. Note that the left side or the right side means the left side or the right side with respect to the center of the agricultural work vehicle 1 in the vehicle width direction.

The hydraulic pump 43 configures a part of the hydraulic drive mechanism 40 for driving the crawler travel parts 10. In addition to the hydraulic pump 43, the hydraulic drive mechanism 40 includes the first hydraulic hose 41, the oil filter 42, the second hydraulic hose 44, and the hydraulic motor 45.

As described above, the hydraulic oil is stored in the tank frame 24. As described above, since the tank frame 24 and the hydraulic pump 43 are arranged separately on the left and right sides, the first hydraulic hose 41 connecting the tank frame 24 and the hydraulic pump 43 is routed across the left and right sides. Specifically, as illustrated in FIG. 5, one end of the first hydraulic hose 41 is connected to the tank frame 24. The first hydraulic hose 41 is routed upward along the right frame 25b from the point of connection with the tank frame 24. Then, as illustrated in FIG. 4, the first hydraulic hose 41 is routed rearward along the upper frame 27 on the right side, then routed leftward along the coupling frame 26c, and then routed downward along the left frame 26a, so as to be connected to the oil filter 42.

The oil filter 42 removes dust, etc., contained in the hydraulic oil to purify the hydraulic oil. As with the fuel tank 33, the oil filter 42 is disposed on the support platform of the left support platform frame 23. In other words, the oil filter 42 is disposed above the hydraulic pump 43. Further, the oil filter 42 and the hydraulic pump 43 are connected by a hydraulic hose.

The hydraulic pump 43 is driven by the engine 31. The hydraulic pump 43 is configured so as to include two variable displacement pumps. The hydraulic oil discharged by one pump is used to drive the crawler travel part 10 on the left side. The hydraulic oil discharged by the other pump is used to drive the crawler travel part 10 on the right side. The hydraulic pump 43 changes the discharge amount of hydraulic oil by changing the inclination angle of a swash plate, for example. Therefore, the hydraulic pump 43 also functions as a transmission device for the crawler travel parts 10.

The second hydraulic hose 44 connects the hydraulic pump 43 to the hydraulic motor 45 on the left side. Specifically, the second hydraulic hose 44 is routed forward along the left support platform frame 23 so as to be connected to the hydraulic motor 45 which is arranged in front of the left support platform frame 23. Further, another second hydraulic hose 44 connects the hydraulic pump 43 to the hydraulic motor 45 on the right side. Specifically, the second hydraulic hose 44 is routed forward along the left support platform frame 23, then routed upward along the left frame 25a, and then routed rightward along the coupling frame 25c, so as to be connected to the hydraulic motor 45 which is arranged in front of the tank frame 24.

The hydraulic motor 45 converts the hydraulic oil supplied from the hydraulic pump 43 into power. This power is transferred to the drive sprockets of the crawler travel parts 10 via a power transfer member (belt) in the transfer case 46. As described above, in the present embodiment, it is necessary that the hydraulic hoses are arranged along the front structure 25, the rear structure 26, etc., because of the presence of the passage space 13.

As illustrated in FIG. 5, the chemical tank 51 is arranged on the tank frame 24. The chemical tank 51 includes the container part 51a, the liquid supply cap 51b, and the vibration reduction plates 51c. The container part 51a is a container-shaped section that contains a chemical to be sprayed on the plant 100. The liquid supply cap 51b is a section formed on the upper face of the container part 51a so as to be openable/closable for replenishing the container part 51a with a chemical. The vibration reduction plates 51c are arranged inside the container part 51a. One or more vibration reduction plates 51c are arranged such that the thickness direction matches the front-rear direction. Accordingly, even in a case where an inertial force in the front-rear direction is applied to the chemical in the container part 51a during acceleration and deceleration of the agricultural work vehicle 1, the shaking of this chemical can be reduced.

The chemical tank 51 is a trapezoidal-shaped container with the lower side shorter than the upper side. Therefore, spaces are formed below the chemical tank 51 (in detail, below the front part of the chemical tank 51 and below the rear part of the chemical tank 51). In these spaces, the tank support parts 52 for supporting the chemical tank 51 are arranged, respectively. Further, in the space below the front part of the chemical tank 51, the protrusion part 24a that protrudes upward from the tank frame 24 is arranged. Note that the oil cap 24b having, for example, a breather function is disposed on the protrusion part 24a. Further, in the space below the rear part of the chemical tank 51, a member for supplying or ejecting the chemical is arranged.

In the present embodiment, heavy objects such as the hydraulic oil tank (the tank frame 24), the engine 31, the hydraulic pump 43, and the chemical tank 51 are arranged at the lower part, instead of the upper part. As a result, the center of gravity of the agricultural work vehicle 1 can be lowered, so that the agricultural work vehicle 1 is easily stabilized during traveling on a sloping land or during making a turn and thus is not easily fall over, for example. Further, also in the aspect that these heavy objects do not protrude in the front-rear direction and the left-right direction from the crawler travel parts 10, the agricultural work vehicle 1 is easily stabilized.

Further, since the hydraulic pump 43 is driven by the engine 31, it is not preferable that the hydraulic pump 43 and the engine 31 are arranged separately on the left and right sides. However, in a case where the hydraulic oil tank is also arranged on the same side of the left and right sides in addition to the engine 31 and the hydraulic pump 43, the weight on the side where these are disposed becomes very heavy. In this regard, in the present embodiment, the hydraulic oil tank (the tank frame 24) is arranged on the opposite side of the hydraulic pump 43 on purpose, so that the weight balance between the left and right sides of the agricultural work vehicle 1 is preferable.

Next, a configuration for ejecting the chemical stored in the chemical tank 51 will be explained. In addition to the chemical tank 51, the agricultural work vehicle 1 is equipped with the ejection pump 53, the support frames 55, and the ejection nozzle units 56.

The chemical stored in the chemical tank 51 is supplied by a hose, which is not illustrated in the drawings, from an opening or the like formed at the lower part of the chemical tank 51 to the ejection pump 53. As illustrated in FIG. 4, the ejection pump 53 is arranged at the rear part of the left support platform frame 23 (behind the hydraulic pump 43). The ejection pump 53 is hydraulically operated or electrically operated so as to increase the pressure of the supplied chemical. In the present embodiment, although the ejection pump 53 is arranged only on the left side, it is also possible that the ejection pump 53 is arranged only on the right side or arranged on both sides.

The support frames 55 and the ejection nozzle units 56 are arranged as left-right pairs. The support frame 55 and ejection nozzle unit 56 on the left side are supported by the left frame 26a, and the support frame 55 and ejection nozzle unit 56 on the right side are supported by the right frame 26b. Since the support frames 55 and ejection nozzle units 56 are left-right reversals and have the same configurations, only the left side will be explained below.

The support frame 55 is an L-shaped member and includes the first section and the second section. The longitudinal direction of the first section is the front-rear direction. The first section is arranged so as to extend rearward from the inner side face of the left frame 26a with respect to the left-right direction. The longitudinal direction of the second section is the left-right direction and is arranged so as to extend outward in the left-right direction from the first section.

The ejection nozzle unit 56 is connected to the second section of the support frame 55. The ejection nozzle unit 56 is arranged so as to extend in the up-down direction and, on the inside, a route through which the chemical passes is created. One or more ejection ports 56a are formed in the ejection nozzle unit 56. In the present embodiment, the ejection nozzle unit 56 having the ejection ports 56a formed to eject the chemical to the left side and the ejection nozzle unit 56 having the ejection ports 56a that eject the chemical to the right side are separately arranged. Note that it is also possible that the ejection ports 56a for the ejection to the left side and the ejection ports 56a for the ejection to the right side are formed in a single ejection nozzle unit 56. The ejection nozzle unit 56 ejects the high-pressure chemical, which is supplied by the ejection pump 53, from the ejection ports 56a.

Next, with reference to FIG. 1 and FIG. 2, the electrical components included in the agricultural work vehicle 1 will be explained. As illustrated in FIG. 1, the antenna units 81, the LiDARs 82, and the tail lights 83 are arranged at the rear part of the agricultural work vehicle 1.

The antenna units 81 are arranged as a front-rear pair. Since the front and rear antenna units 81 are front-rear reversals and have the same configuration, only the rear antenna unit 81 will be explained below. The antenna unit 81 is attached to the attachment member connected to the upper face of the coupling frame 26c. Therefore, the antenna unit 81 is arranged at the upper part in the center of the vehicle width direction of the agricultural work vehicle 1 and is supported by the coupling frame 26c. For example, the antenna unit 81 houses devices of a communication system required for the agricultural work vehicle 1 to perform autonomous traveling, etc. Specifically, the antenna unit 81 houses a GNSS antenna, an antenna for wireless communication, an inertial measurement unit (IMU), etc. The antenna for wireless communication is an antenna for communication with a terminal that is operated by a worker. Note that, in a case where the agricultural work vehicle 1 uses the GNSS-RTK method or the like, the antenna unit 81 may include an antenna for receiving positioning signals from other reference stations.

The LiDARs 82 are arranged as a front-rear pair. Since the front and rear LiDARs 82 are front-rear reversals and have the same configuration, only the rear LiDAR 82 will be explained below. The LiDAR 82 is attached to the lower face of the antenna unit 81. The LiDAR 82 emits radio waves diagonally downward and measures the time period by the time of receiving the reflected waves of the radio waves, so as to thereby obtain the position and shape of an object or the like on the rear side. Further, since the LiDAR 82 emits radio waves that spread in the up-down direction and the left-right direction, it is possible to obtain the position and shape of an object or the like in a wide range around the LiDAR 82. In a case where an obstacle or the like is detected based on a detection result of the LiDAR 82, the control of stopping the crawler travel parts 10 or the like will be performed.

The tail lights 83 are disposed as a left-right pair and respectively arranged below the left end portion and below the right end portion of the antenna unit 81. The tail lights 83 light so that a worker or the like on the rear side is informed of the presence of the agricultural work vehicle 1. Note that it is possible that the tail lights 83 also serve as brake lamps, direction indicators, or the like.

At the front part of the agricultural work vehicle 1, the front lights 84 and the warning lamp 85 are arranged in addition to the antenna unit 81 and the LiDAR 82 described above.

The front lights 84 are disposed as a left-right pair. As with the warning lamp 85, the front lights 84 are respectively arranged below the left end portion and below the right end portion of the antenna units 81. The front lights 84 emit light forward.

The warning lamp 85 is disposed in the vicinity of the antenna unit 81 (in detail, to the left rear of the antenna unit 81). The warning lamp 85 lights or blinks when an abnormality occurs or the like.

As described above, in the present embodiment, many electrical components are arranged at the upper part in the center with respect to the vehicle width direction in a concentrated manner. Accordingly, electric wires that supply electric power and electric wires for electric communication, etc., can be collectively routed. Further, it is preferable that the antenna units 81 are arranged at high positions in order to perform reliable communication. It is preferable that the LiDARs 82 are arranged at high positions in order to perform the detection of the surroundings in a wide range. It is preferable that the tail lights 83, the front lights 84, and the warning lamp 85 are arranged at high positions in order to be highly visible from the outside. Further, since these members are lighter in weight than the engine 31 and the like, the center of gravity is not likely to be raised even if they are arranged at high positions.

Further, the bumper sensors 86 are arranged at the four corners of the agricultural work vehicle 1. The bumper sensors 86 are contact type sensors and, in a case where the bumper sensors 86 make contact with an obstacle or the like, the control of stopping the crawler travel parts 10 or the like will be performed. Specifically, the left rear bumper sensor 86 is arranged so as to detect an obstacle on the rear side and the left side behind the left support platform frame 23. The right rear bumper sensor 86 is arranged so as to detect an obstacle on the rear side and the right side behind the tank frame 24. The left front bumper sensor 86 is arranged so as to detect an obstacle on the front side and the left side of the hydraulic motor 45 on the left side. The right front bumper sensor 86 is arranged so as to detect an obstacle on the front side and the right side of the hydraulic motor 45 on the right side.

The agricultural work vehicle 1 can manually travel for situations where the autonomous traveling cannot be performed or the like. As illustrated in FIG. 1, the agricultural work vehicle 1 includes the operation lever 87 for a manual instruction of traveling. The operation lever 87 is arranged inside the outer covers 62. The open/close part 63, which is a part of the outer covers 62, is configured to be capable of pivoting with the open/close axis 64 serving as the pivotal center. Note that the open/close parts 63 are disposed on both of the left and right outer covers 62. Accordingly, by opening the open/close parts 63, a worker can operate the operation lever 87, refuel the fuel tank 33, and replenish the chemical tank 51 with the chemical.

Further, the step 65 for a worker to be aboard when operating the operation lever 87 is disposed on the left vehicle body 11. The step 65 is connected to the crawler travel part 10 or the connection plate 22. The step 65 is normally housed by a biasing force using a spring or the like and is configured to be pulled out and used by a worker when necessary.

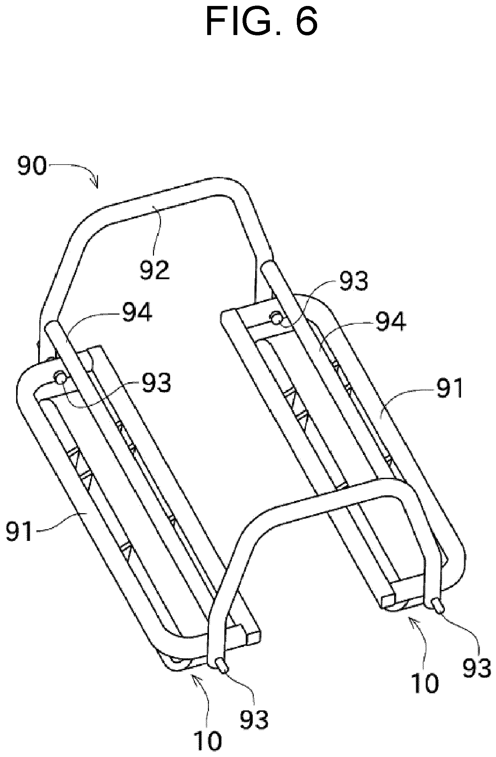

Next, a modification example of the above-described embodiment will be explained. FIG. 6 is a perspective view illustrating a support mechanism of the crawler travel parts 10 according to the modification example.

The crawler travel parts 10 of the present modification example are attached to the crawler attaching frame 90. The crawler attaching frame 90 includes the crawler connecting members 91, the left-right coupling members 92, the pivotal axes 93, and the reinforcement members 94.

The crawler connecting members 91 are disposed as a left-right pair and are connected to the crawler travel parts 10 via appropriate members. The left-right coupling members 92 connect the left and right crawler connecting members 91 to each other. The crawler connecting members 91 and the left-right coupling members 92 are coupled via the pivotal axes 93 so as to be capable of pivoting. Further, the left-right coupling members 92 are disposed as a front-rear pair. The front and rear left-right coupling members 92 are connected via the reinforcement members 94.

With this configuration, the crawler travel parts 10 can rotate integrally with the crawler connecting members 91 about the pivotal axes corresponding to the front-rear direction. Therefore, for example, even in a case where the height of the ground is different for the left and right crawler travel parts 10, the crawler travel parts 10 pivot so that the left and right crawler travel parts 10 can be leveled. Accordingly, stable traveling is possible.

As explained above, the agricultural work vehicle 1 of the above-described embodiment includes the crawler travel parts 10, the support platform frames (the left support platform frame 23, the tank frame 24), the structures (the front structure 25 and the rear structure 26), the engine 31, the hydraulic pump 43, the chemical tank 51, and the ejection nozzle units 56. The crawler travel parts 10 are hydraulically operated and are arranged as a left-right pair so as to travel in such a manner that the plant 100 is positioned therebetween with respect to the left-right direction. The support platform frames are arranged as a left-right pair and respectively overlap the left and right crawler travel parts 10 in plan view. The structures are arranged as a front-rear pair and include the left frames 25a and 26a, which extend upward on the left side of the vehicle width direction, the right frames 25b and 26b, which extend upward on the right side of the vehicle width direction, and the coupling frames 25c and 26c, which couple the upper parts of the left frames 25a and 26a with the upper parts of the right frames 25b and 26b at positions higher than the support platform frames. The engine 31 is arranged on either one (the left support platform frame 23) of the left and right support platform frames. The hydraulic pump 43 is arranged on the same side (the left support platform frame 23) of the left and right support platform frames as the engine and is driven by the engine 31 for driving at least the crawler travel parts 10. The chemical tank 51 is arranged on the opposite side (the tank frame 24) of the left and right support platform frames as compared with the engine. The ejection nozzle units 56 eject a chemical on the plant 100.

Accordingly, the engine 31, the hydraulic pump 43, and the chemical tank 51, which are heavy objects, can be supported on a support platform frame that is lower than the coupling frames 25c and 26c. As a result, the center of gravity can be lowered, so that the posture of the agricultural work vehicle 1 can be stabilized.

Further, the agricultural work vehicle 1 of the above-described embodiment includes the tank frame 24 (the hydraulic oil tank) that stores hydraulic oil to be supplied to the hydraulic pump 43. The tank frame 24 has a shape extending in the front-rear direction and configures at least a part of the support platform frames.

Accordingly, since the hydraulic oil tank configures a part of the frame configuration (the vehicle body frame 20), the frame configuration can be simplified.

Further, in the agricultural work vehicle 1 of the above-described embodiment, the tank frame 24 is arranged on the same side as the chemical tank 51 with respect to the left and right sides.

Accordingly, by arranging the hydraulic pump 43 and the tank frame 24 separately on the left and right sides on purpose, the weight on the engine 31 side, which tends to be heavy, can be lighter.

Further, the agricultural work vehicle 1 of the above-described embodiment includes the antenna units 81 for remote operation or autonomous traveling, which are supported by at least one of the front and rear coupling frames 25c and 26c (via an attachment member).

In general, a riding type or walking type chemical spraying machine is required to have a structure that prevents the worker from inhaling the chemical. In this regard, this type of structure can be omitted or simplified by adopting a remotely-operated type or an autonomously-traveling type. Further, it is preferable that the antenna units 81 are arranged at high positions in order to perform reliable communication. Note that, since the antenna units 81 are relatively lightweight, there is little effect on the center of gravity even if they are arranged at high positions.

Further, in the agricultural work vehicle 1 of the above-described embodiment, the ejection nozzle units 56 that eject the chemical to the left and right are supported (via the support frames 55) by at least one of the front and rear left frames 25a and 26a and by at least one of the front and rear right frames 25b and 26b.

Accordingly, by utilizing the left frames 25a and 26a and the right frames 25b and 26b, the chemical can be sprayed to the plants 100 of various heights.

Further, the agricultural work vehicle 1 of the above-described embodiment includes the upper frames 27 and the crawler connection frames 21. The upper frames 27 are arranged as a left-right pair to couple upper parts of the structures, i.e., the front structure 25 and the rear structure 26, with each other. The crawler connection frames 21 are arranged as a left-right pair to be respectively connected to the inner sides of the left and right crawler travel parts 10 with respect to the left-right direction and extend in the front-rear direction. The left frames 25a and 26a are connected to the crawler connection frame 21 on the left side. The right frames 25b and 26b are connected to the crawler connection frame 21 on the right side.

Accordingly, since the front structure 25 and the rear structure 26 are coupled at the upper parts as well, the strength can be improved. Furthermore, since the left frames 25a and 26a and the right frames 25b and 26b stand up from the inner sides of the crawler travel parts 10, the support surface of the support platform frames can be made wider as compared with a configuration in which they stand up from the center.

Although the preferred embodiment and modification example of the present invention are explained above, the above-described configurations can be changed as described below, for example.

The layout of each component of the agricultural work vehicle 1 of the above-described embodiment is an example and can be changed as necessary. For example, it is also possible that the ejection nozzle units 56 are disposed at the front part or at the side parts of the agricultural work vehicle 1 instead of or in addition to the rear part of the agricultural work vehicle 1.

In the above-described embodiment, although the length of the passage space 13 in the left-right direction is constant, it is also possible that the length is variable. That is, it is also possible that a mechanism for adjusting the distance between the left vehicle body 11 and the right vehicle body 12 is included.

In the above-described embodiment, although the tank frame 24 alone has the function as a support platform frame, it is only necessary that the tank frame 24 configures at least a part of a support platform frame. Therefore, the tank frame 24 to which another frame is connected may function as a support platform frame.

The structure of the vehicle body frame 20 of the above-described embodiment is an example and can be changed as necessary. For example, although the vehicle body frame 20 of the above-described embodiment includes one structure at each of the front and rear parts (the front structure 25 and the rear structure 26), it is also possible that more structures are additionally included. Further, the shape of each frame is not limited to a solid or hollow column shape and may also be a plate shape.

In the above-described embodiment, although the LiDARs 82 and the bumper sensors 86 are arranged as sensors for detecting obstacles, it is also possible that other sensors (e.g., ultrasonic sensors, cameras for detecting obstacles by image recognition, etc.) are additionally arranged.

In the above-described embodiment, the agricultural work vehicle 1 sprays a chemical on the plant 100, which is a spray target object (a work target object). Alternatively, it is also possible that the agricultural work vehicle 1 is configured to, for example, cut grass on a farm, perform plucking (a work of trimming branches) of agricultural products such as grapes, or measure the quality (sugar content, etc.) of agricultural products. In this case also, the agricultural work vehicle 1 straddles the plant 100, which is the work target object, (in such a manner that the work target object is positioned between the crawler travel parts 10 with respect to the left-right direction) and performs the respective works. Further, it is also possible that a variety of work machines can be attached to the agricultural work vehicle 1. In this case, for example, at the time of spraying a chemical, the work is performed by use of a work machine for spraying a chemical and, in a case where grass cutting is performed after that, the work machine for spraying a chemical is replaced with a work machine for cutting grass. Accordingly, a variety of works can be performed with one agricultural work vehicle 1.

### DESCRIPTION OF REFERENCE NUMERALS

1 agricultural work vehicle
10 crawler travel part
20 vehicle body frame
21 crawler connection frame
22 connection plate
23 left support platform frame (support platform frame)
24 tank frame (support platform frame, hydraulic oil tank)
25 front structure (structure)
26 rear structure (structure)
27 upper frame
31 engine
43 hydraulic pump
56 ejection nozzle unit (chemical ejection part)
81 antenna unit

## Claims

1. An agricultural work vehicle (1) for working in a farm where work target objects (100) are arranged in a plurality of rows, comprising
a sensor capable of obtaining a position and shape of objects and the like around a vehicle body, wherein
the sensor is located on a front side of the vehicle body.

2. The agricultural work vehicle (1) according to claim 1, wherein
the sensor is located in the middle of a vehicle width direction.

3. The agricultural work vehicle (1) according to claim 1 or 2, wherein
the vehicle body comprises:
a right vehicle body (12) supported by a right travel part of left-right pair of travel parts;
a left vehicle body (11) supported by a left travel part of the left-right pair of travel parts; and
a coupling part that couples an upper part of the right vehicle body (12) and an upper part of the left vehicle body (11); and wherein
the sensor is located on the front side of the coupling part.

4. The agricultural work vehicle (1) according to claim 3, wherein
a passage space (13) that makes the work target objects (100) pass through between the left vehicle body (11) and the right vehicle body (12); and
the sensor is located above the passage space (13).

5. The agricultural work vehicle (1) according to claim 3 or 4, wherein
the sensor is supported by the coupling part.

6. The agricultural work vehicle (1) according to any one of claims 1-3, wherein
the sensor is a first sensor; and
the agricultural work vehicle (1) further comprises a second sensor capable of obtaining a position and shape of objects and the like around a vehicle body, wherein the second sensor is located on a rear side of the vehicle body.

7. The agricultural work vehicle (1) according to claim 6, wherein
the second sensor is located in the middle of the vehicle width direction.

8. The agricultural work vehicle (1) according to claim 6 or 7, wherein
the second sensor is located rearwards the coupling part.

9. The agricultural work vehicle (1) according to any one of claims 6-9, wherein
the second sensor is located above the passage space (13).

10. The agricultural work vehicle (1) according to any one of claims 6 to 9, wherein
the second sensor is supported by the coupling part.
